(19) Europäisches Patentamt
European Patent Office
Office européen des brevets

(11) EP 1 607 416 A1

(12) **EUROPEAN PATENT APPLICATION**

(43) Date of publication:
**21.12.2005 Bulletin 2005/51**

(51) Int Cl.[7]: **C08F 8/32**, C08F 8/36, C08F 8/12

(21) Application number: **04291544.7**

(22) Date of filing: **18.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicants:
- **SERVICES PETROLIERS SCHLUMBERGER 75007 Paris (FR)**
  Designated Contracting States:
  **FR**
- **SCHLUMBERGER TECHNOLOGY B.V. 2514 JG Den Haag (NL)**
  Designated Contracting States:
  **AT BE BG CH CY CZ DE DK EE ES FI GR HU IE IT LU MC PL PT RO SE SI SK TR**
- **SCHLUMBERGER HOLDINGS LIMITED Road Town, Tortola (VG)**
  Designated Contracting States:
  **GB NL**

(72) Inventors:
- **Caritey, Jean-Philippe 92350 Le Plessis Robinson (FR)**
- **Chassenieux, Christophe 75020 Paris (FR)**
- **Lafuma, Françoise 92330 Sceaux (FR)**
- **La Chatelier-Brunet, Christille 75012 Paris (FR)**
- **Maroy, Pierre 42330 Saint Galmier (FR)**

(74) Representative: **Ménès, Catherine**
**Etudes et Productions Schlumberger**
**Service Propriété Intellectuelle**
**1, rue Henri Becquerel**
**92142 Clamart Cédex (FR)**

# (54) Anionic amphiphilic copolymers and solutions comprising thereof

(57) It is proposed a new family of terpolymers based on repeating units of two different types of hydrophobic moieties modified with anionic charged groups. In a preferred embodiment, the first hydrophobic moiety is an aromatic compound such as styrene and the second hydrophobic moiety is a fatty acid. Depending on the modification rate, and on the neutralization degree, the aqueous solutions of the terpolymers have different rheological behavior, ranging from yield point fluid, shear-thickening and polysoaps.

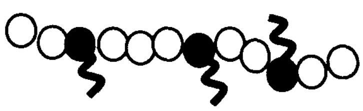

Figure 1-A

EP 1 607 416 A1

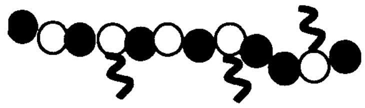

Figure 1-B

## Description

### Technical Field of the Invention

The present invention relates to the synthesis of anionic amphiphilic polymers, highly hydrophobic but nevertheless soluble in aqueous solution. The invention also relates to aqueous solution including said polymers that exhibit an exceptional rheological behavior, the combination of a high yield point and of a low plastic viscosity.

### Background of the Invention

The art of well services mostly deals with fluids including solids in suspension. Such suspensions include for instance cement slurries, drilling fluids, spacer fluids and treatment fluids such as fracturing fluids loaded with proppant. In all cases, a major concern is to stabilize the suspension to avoid settling. For that purpose, most well services fluids include rheology-optimizer additives tq endow a solution with non-Newtonian properties with a high yield point (in other words a relatively high viscosity at rest) and a low plastic viscosity (in other words, a fluid that is easy to displace once the movement starts).

Amphiphilic polymers are increasingly used to control the rheology in aqueous formulations. These polymers typically include a hydrophilic backbone with grafted hydrophobic units or in another type, grafted amphiphilic units that are surfactant-like and therefore are often referred to as polysoaps.

In aqueous solution, the hydrophobic units (or hydrophobic parts of the amphiphilic units) associate to form micellar type aggregates. Above a threshold concentration, the hydrophobic units link together the different polymer chains to form a reversible polymer network, leading to very viscous solutions.

Water-based fluids that can viscosity under shear or can produce a gel or form a gel under shear are obtained by dissolving polymers in an aqueous phase. These polymers comprise three types of functional groups: non-ionic functional groups that are hydrosoluble at the temperature under consideration, ionic functional groups, and functional groups that are hydrophobic at the temperature under consideration. These three types of functional groups can be distributed or spread in a random distribution along the polymer chain. A slightly block distribution is acceptable. Forsome applications in oil well services, functional groups which exhibit LCST (Lower Critical Solution Temperature) behavior may be used instead of hydrophobic functional groups. At temperatures above the LCST, the functional groups are hydrophobic. An example of this type of amphiphilic polymer with reversible shear-thickening properties suitable for oil well applications is disclosed in International Patent Application No. 02/102917.

The polymers of the International Patent Application above-mentioned, as well as most amphiphilic polymers known from the prior art are mostly hydrophilic with local hydrophobic units. In *Journal of molecular structure,* **2000**, vol.554, p.99-108, Chassenieux, Fundin, Ducouret and Iliopoulos have however reported that it was possible to prepare a new type of amphiphilic water soluble polymer based on repeating units of two water insoluble polymers, poly(dimethylhexadecyl(vinylbenzyl)ammonium chloride) and polystyrene. At relatively low concentration, the solutions behave as viscous fluids whereas for higher concentration, viscoelastic properties appear. Though these polymers could be used for modifying rheology, they are cationic and therefore, are likely to raise compatibility issue in the presence of cations - like in a typical oil environment where in particular calcium ions are normally expected.

### Summary of the Invention

The present invention aims at providing a new family of polymers that would be useful for modifying the rheological properties of aqueous solutions based on them. In a first embodiment, the present invention thus relates to aqueous solutions of polymers based on three kinds of repeating units: two moieties preferably of different hydrophobic nature and anionic charged groups

Preferably, the first and second types of hydrophobic moieties show clearly distinct hydrophobic properties as exhibited by their limit solubility or their polarity. This can be achieved for instance by selecting for the first moiety an aromatic and for the second moiety a fatty acid with a long aliphatic chain (preferably an alkyl chain with at least 6 carbon atoms). The alkyl chain may be hydrogenated or perfluorated and is preferably grafted to the backbone chain through an hetero-functional group such as an amido, an ester or a urethane.

The anionic group may for instance be a carboxylic, a sulfonate or a phosphate group.

The anionic amphiphilic polymers of the invention may be designed with various hydrophobic modification rates while remaining water-soluble, which provides a high yield point and a low plastic viscosity. Advantageously, the yield point can be adjusted by varying the concentration of polymers in the solution, while keeping low plastic viscosity can be independently adjusted, a property that leads to multiple applications in the field of well services.

In a further embodiment, the invention relates to service fluids for subterranean wells including the polymers of the invention as rheological modifiers. The aqueous solutions typically contain from about 3 to 15% (by weight) of

polymers. The polymers of the invention may for instance be used as anti-settling agents in cement slurries or spacer fluids where the high yield point contributes to the suspension of the cement grains or of the weighting agents — while the low plastic viscosity contributes to an improved displacement profile, particular useful in horizontal wells. Thanks to the very low plastic viscosity, the polymers of the invention are also effective as drag-reducing additive, thereby minimizing the risk of fracturing the formation for instance while treating small sections (slim holes, restrictions, etc.) or fragile or depleted formations. The polymers of the invention have also applications in other types of complex fluids, such as paints, cosmetic formulation etc. where there is a need to optimize suspension properties.

**Brief Description of the Drawings**

In The above and further objects, features and advantages of the present invention will be better understood by reference to the appended detailed descriptions, and to the drawings wherein:

Figure 1 is a schematic view of usual amphiphilic polymers (figure 1) compared to the highly hydrophobic polymers of the invention.

Figure 2 is a schematic representation of the synthesis of a carboxylated polymer based on alternated styrene and maleic anhydride units.

Figure 3 shows the variation of the specific viscosity with the polymer concentration for various modification rates; and reference data for the SMA copolymer;

Figure 4 shows the variation of the specific viscosity with the terpolymer 60Dm concentration, for various neutralization rates; and reference data for the SMA copolymer;

Figure 5 shows the variation of the specific viscosity with the shear rate for various concentrations of 60Dm terpolymer.

**Detailed Description of the Invention**

Usually, amphiphilic polymers backbones are mostly hydrophilic with local hydrophobic units as schematized figure 1-A where the open circles represent hydrophilic monomers; the full black circles hydrophobic monomers and the scribbly line represent grafted alkyl groups. With the polymers according to the present invention and schematized figure 1-B, the backbone consists mostly of hydrophobic groups with a limited amount of hydrophilic units and charges to achieve solubility.

The polymers according to the present invention are terpolymers based on combination of a first and second type of hydrophobic groups and of anionic charged groups. Two types of anionic charged groups have been studied: carboxylates and sulfonates groups.

**Synthesis of carboxylated terpolymer**

Figure 2 illustrates the main steps of a method to prepare carboxylated terpolymer according to the invention. First a copolymer styrene and maleic anhydride acid (SMA) is obtained. The synthesis was performed with an SMA copolymer in which each monomer unit consist of exactly one styrene unit and one maleic anhydride unit (in other words, z=0.5), so that the molecular mass of the repeated unit is 102 g/mol. Other commercially available SMA copolymers have higher styrene content with z varying from 0.5 to 0.75. The tested SMA copolymer had a molecular weight Mw of 150kg/mol as measured in the laboratory.

In the second step, the SMA polymer is hydrophobically modified with an amine $C_nH_{2n+1}NH_2$. Different amines having a purity of 99% were tested with n being an even number between 8 and 18. The operative mode for dodecylamine (n=12) is the following:

In a three-necked bottle, 6g of SMA were dissolved in 150ml THF (tetrahydrofuran), under N2 atmosphere, at 60°C. After two hours, 3.3g of amine, in 50ml THF were added dropwise. The reaction was allowed to occur for 24h at 60°C. The terpolymer was recovered by precipitation in diethylether and drying over vacuum.

The general chemical formula of the synthetised polymer is thus:

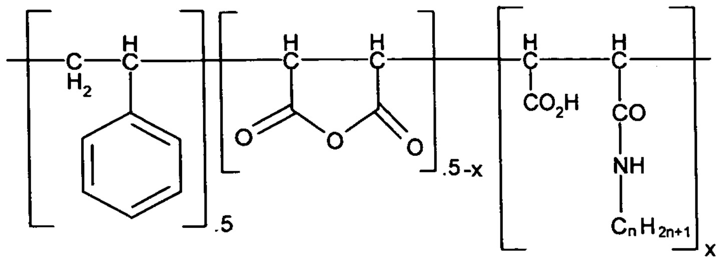

with n being either 8, 10, 12 or 16. For a modification rate of 100%, x equals 0.5. Therefore x varies between 0 and 0.5 (0.5 corresponding to a modification rate equal to 100%, the modification rate is defined as 200x).

The effective modification rate is checked by $^1$H NMR spectrum and reported table 1.

Table 1

| Terpolymer | Amine | Theoretical rate | NMR rate |
|---|---|---|---|
| 20Dm | Dodecylamine | 20% | 22% |
| 40Dm | Dodecylamine | 40% | 44% |
| 50Dm | Dodecylamine | 50% | 50% |
| 60Dm | Dodecylamine | 60% | 62.5% |
| 600cm | Octylamine | 60% | 64% |
| 60Hm | Hexadecylamine | 60% | 60% |

Note that the effective modification rate is higher than expected due to some contamination by water of the SMA polymer. The molecular weight of the terpolymer 60Dm is about 230 000 g/mol.

The last step is the hydrolysis of the polymer allowing its solubilization in water under basic conditions (addition of NaOH), at 60°C, over 6 hours under stirring. Note that sodium hydroxide can be substituted with other hydroxide of monovalent cation such as lithium hydroxide or potassium hydroxide for instance.

Depending on the neutralization rate, the polymer formula can be thus expressed by where n is either 8, 10, 12, 14 or 16, x varies between 0 and 0.5 and R is a monovalent cation or a proton.:

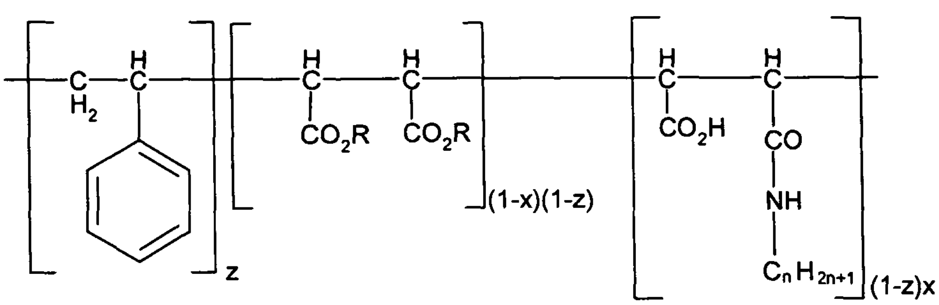

**Rheological properties of the carboxylated terpolymer**

Rheological measurements were carried out. Figure 3 shows the evolution of the specific viscosity (noted $\eta_{spe}$), under a shear of 3.16 rad/s, as a function of the terpolymer concentration in the solution. In Figure 3, the full triangles correspond to the unmodified SMA polymer, the open circles to the 60Dm terpolymer, the open squares to to the 40Dm terpolymer and the open lozenges to the 20Dm terpolymer.

Compared to the SMA polymer, the addition of the alkyl pendants clearly leads to lower viscosities at low concentration (probably due to aggregation) and higher viscosities above a threshold concentration, attributed to the

transformation of intra into inter molecular interactions between the polymer chains.

Figure 4 shows the effect of the neutralization degree defined as the ratio $\alpha = \frac{[NaOH]}{[COOH]}$ on the specific viscosity. Tests were carried out with the 60Dm terpolymer (with $\alpha$ =1 (open lozenges); $\alpha$ =0.9 (open triangles) and $\alpha$ =0.8 (open squares)). As for figure 3, the data are compared with those of the copolymer SMA (open squares). This test shows that the neutralization degree does not have a significant impact at lower concentration but that it allows adjusting the threshold concentration at which the intermolecular associations occur.

The flow properties of the 60Dm terpolymer are illustrated with figure 5 that shows the value of the specific viscosity depending on the shear rate applied to the solution for different polymer concentrations. At lower concentration, the solution has a Newtonian behavior. At intermediate concentrations, the system exhibits a Newtonian plateau at lower shear rate and becomes shear-thinning at higher shear rate. At higher concentrations, a minimum shear rate is required to cause the flow and thereafter, the system exhibit a shear-thinning behavior.

Tests repeated with various modification rates and while varying the length of the alkyl group of the amine let to the characterization of the different rheological behaviors of the solutions at room temperature (and/or more slightly higher temperature, for instance about 60°C) as depicted table 2 in which ST stands for shear-thickening; PS for polysoaps (poorly viscous), YPF for yield point fluid and NS for non-soluble.

| | Modification rate | | | | | | | | | | |
|---|---|---|---|---|---|---|---|---|---|---|---|
| n | 10 | 20 | 30 | 40 | 45 | 50 | 60 | 70 | 80 | 90 | 100 |
| 8 | | | | | | | YPF | | | | |
| 12 | ST | ST | | PS | PS | YPF | YPF | NS | NS | NS | NS |
| 16 | | ST | | NS | | YPF | YPF | NS | NS | | |
| 18 | | | | | | | NS | | | | |

**Table 2**

In the area corresponding to solutions with a yield point at room or slightly higher temperature, the terpolymers have a thermo-thickening behavior. In domain corresponding to a shear-thickening behavior, the terpolymers also have thermo-thinning behavior.

The influence of various factors was studied with the 60Dm terpolymer:

**Influence of the molecular weight of the SMA copolymer**

A sample prepared from a SMA copolymer with a molecular weight around 1000 g/mol and modified at 60% (thereby similar to 60Dm) showed that a behavior similar to a viscoelastic fluid could be obtained upon addition of salt, which reinforces hydrophobic interactions.

**Influence of pH**

The pH of the samples is typically comprised between 11 and 12.5. Nevertheless, terpolymers which exhibit yield point keep this property when pH ranges from 9.6 to 13.1 (the change in the pH is done by addition of concentrated sodium hydroxide or hydrochloric acid). Otherwise systems show phases separations.

**Influence of salts**

Terpolymers which exhibit yield point keep this property in presence of a monovalent salt (NaCl) if its concentration remains lower than 100mM. Actually, when NaCl is added, the concentration thresholds where solutions turn into gels show lower values. Moreover, salt reinforces yield point of concentrated systems. Nevertheless, the addition of any divalent salt induces polymer precipitation.

With a lyotropic salt such as KSCN, at low concentration, the viscosity of the systems is slightly modified. When a 10g/L (200mmol) salt concentration is considered, the systems become biphasic after two weeks. Moreover, such a salt does not allow the increase of the solubility of insoluble systems such as 80Dm.

**Influence of Surfactants**

The influence of the addition of carboxylated surfactants with C8, C10, and C12 alkyl chains, was evaluated

for the 60Dm at a fixed concentration equals to 6wt%. When the C8 based surfactant is added, the systems show some turbidity. Its yield point slightly increases for a surfactant concentration of 5.8g/l, but the system is no more soluble if the surfactant concentration is 10 times higher. When the C10 surfactant is added, no turbidity appears when surfactant concentration ranges from 0 up to 272g/l. The yield point seems to reach its lowest value around 70 g/l, and then increases for higher surfactant concentration. Addition of C12 based surfactant induces the loss of the yield point if the concentration of surfactant is higher than 3.4g/l.

Addition of a C10 based sulfonated surfactant to 60Dm induces a loss of the yield point as soon as a small amount is added. However, system remains monophasic up to a surfactant concentration equivalent to 25 times the critical micellar concentration.

**Compatibility with other polymers**

When PVP (polyvinylpyrrolidone with M=10 000 g/mol) is added to a 60Dm system (6% concentration), the yield point is significantly increased. However, PVP concentration should remain below 20g/l.

**Compatibility with Alcohols**

Addition of three C4 based alcohol with different classes to a non-soluble 80Dm system induces the same behavior : an increase in the solubility. A gel formation is observed for a low amount of alcohol, and then, an excess of alcohol induce a destruction of the gel.

**Oil components compatibility**

With addition of aliphatic oil (dodecene), a loss of yield point is observed from 2% wt/wt oil concentration in a 60Dm (6%) system.

With addition of aromatic oil (toluene), a loss of yield point is first observed for a short period of time. Then a reorganization takes place in the system after a long period of time (weeks). Yield point is kept up to 10% wt/wt of oil.

**Sulfonated terpolymers**

Equivalent sulfonated terpolymers, with sulfonate groups replacing the carboxylate groups were prepared to improve the thermal stability and the compatibility with calcium ions.

Figure 6 shows the main steps of a first synthesis route including first the synthesis of a copolymer based on styrene and dodecylmethacrylate, using toluene as solvent, at 70°C during 30 minutes. This step is followed by a sulfonation at 50°C, using dichloroethane as solvent in presence of $H_2SO_4$. The sulfonation reaction is controlled by adjusting the reaction time. The resulting polymer is obtained through evaporation and and dissolution in DMSO.

Starting with a mixture of 80% styrene and 20% dodecylmethacrylate, a 74% styrene/26% dodecylmethacrylate copolymer was prepared in step 1, leading after sulfonation to the following general chemical formula where x is the sulfonation degree.

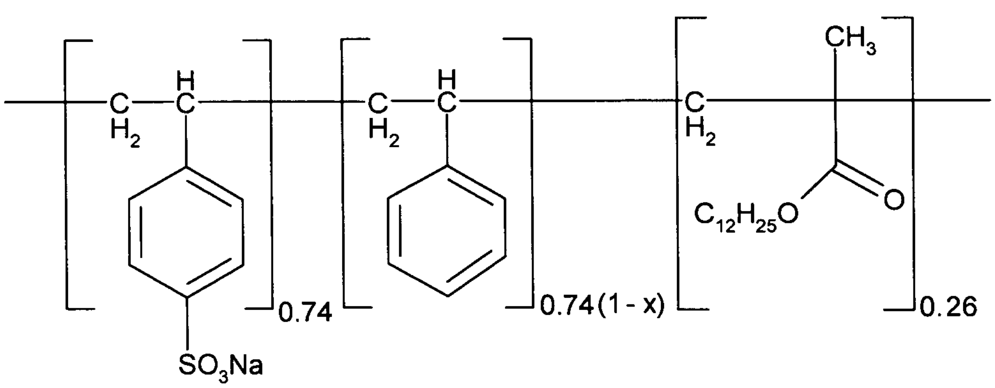

However, with varying values for x up to 30%, no yield point is obtained with such terpolymers.

Another synthesis route is based on terpolymerization of styrene, styrene sulfonate and alkylacrylamide. The solvent is DMSO. The polymerization was allowed to proceed for 24 hours at 65°C. The resulting polymer is obtained by precipitation in ether.

The terpolymer having the following formulae was obtained:

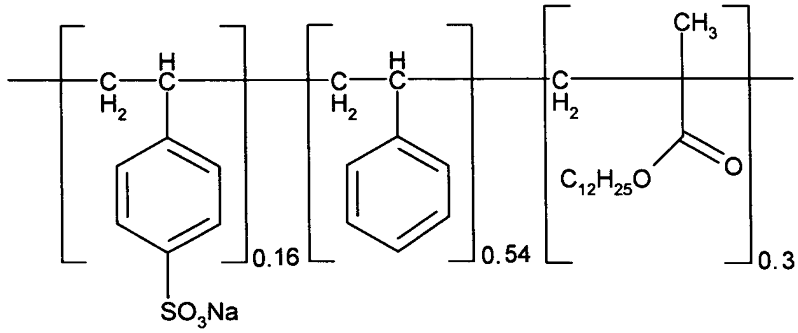

In term of rheological behavior, this polymer is similar to a polyelectrolyte.

## Claims

1. A fluid, comprising a polymer dissolved in an aqueous phase, wherein the polymer is a terpolymer based on repeating units of a first and second type of hydrophobic moieties and of anionic charged groups.

2. The fluid of claim 1, wherein the first and second type of hydrophobic moieties have different hydrophobic nature.

3. The fluid of claim 1 or 2, wherein the first hydrophobic moieties type contains an aromatic group.

4. The fluid of claim 3, wherein the aromatic hydrophobic moiety is a styrene derivative.

5. The fluid according to any of the preceding claims, wherein the second hydrophobic moieties type contains a fatty acid including an alkyl side chain $C_nH_{2n+1}$, with n being an integer greater or equal than 6.

6. The fluid of claim 6 wherein n is selected from the group consisting of 8, 10, 12, 14 and 16.

7. The fluid of claim 5 or claim 6 , wherein the alkyl side chains are grafted to the backbone of the polymer through hetero-functional groups.

8. The fluid of claim 7, where said hetero-functional group is selected from the list consisting of amide, ester and urethane.

9. The fluid according to any of the preceding claims, wherein the anionic group is a phosphate.

10. The fluid according to any of the preceding claims, wherein the anionic group is a sulfonate.

11. The fluid of claim 10, wherein the polymer is represented by the general chemical formula:

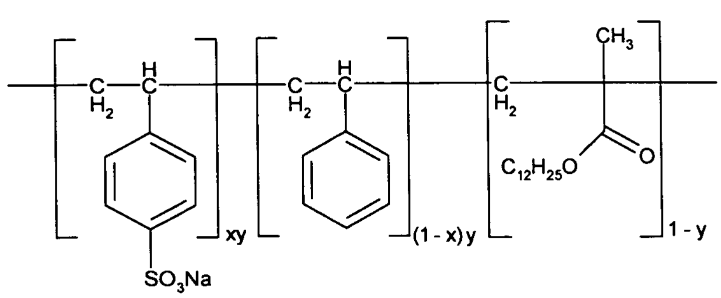

where x is the substitution degree and y is between 0.1 and 0.4.

**12.** The fluid according to any of claims 1 to 8, wherein the anionic group is a carboxylic group.

**13.** The fluid of claim 12, wherein the polymer is represented by the general chemical formula:

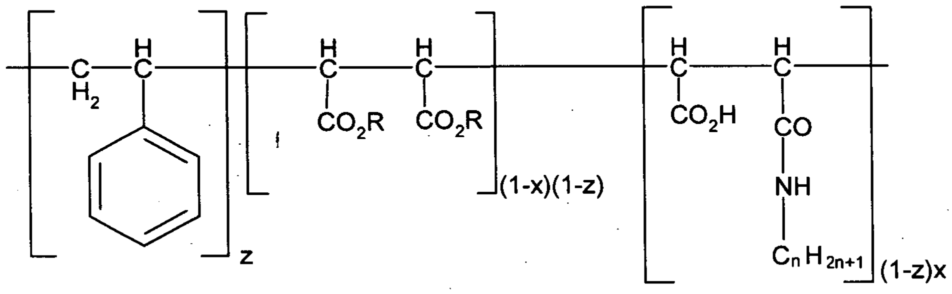

where n is either 8, 10, 12, 14 or 16, x varies between 0 and 0.5 and R is a monovalent cation or a proton.

**14.** The fluid of claim 13, wherein the modification rate, defined as 200x, is 60 and n is 8, 10, 12, 14 or 16.

**15.** The fluid of claim 13, wherein the modification rate, defined as 200x, is 50 and n is 12, 14 or 16.

**16.** The fluid of claim 13, wherein the modification rate, defined as 200x, is 10 and n is 12.

**17.** The fluid of claim 13, wherein the modification rate, defined as 200x, is 20 and n is 12, 14 or 16.

**18.** The fluid of claim 13, wherein the polymer concentration is between 3 and 15% (by weight).

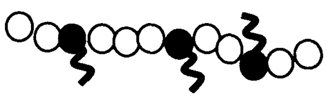

Figure 1-A

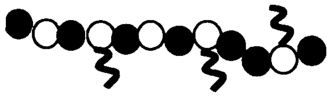

Figure 1-B

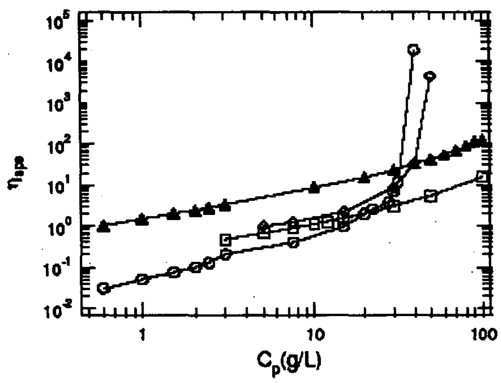


Figure 3

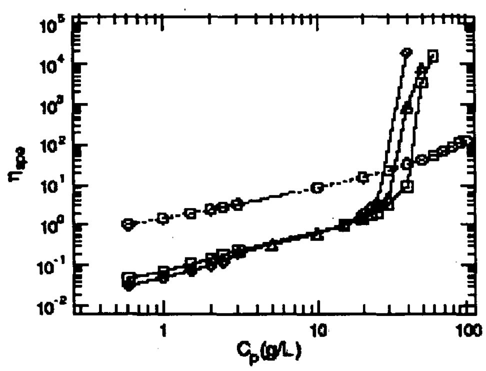


Figure 4

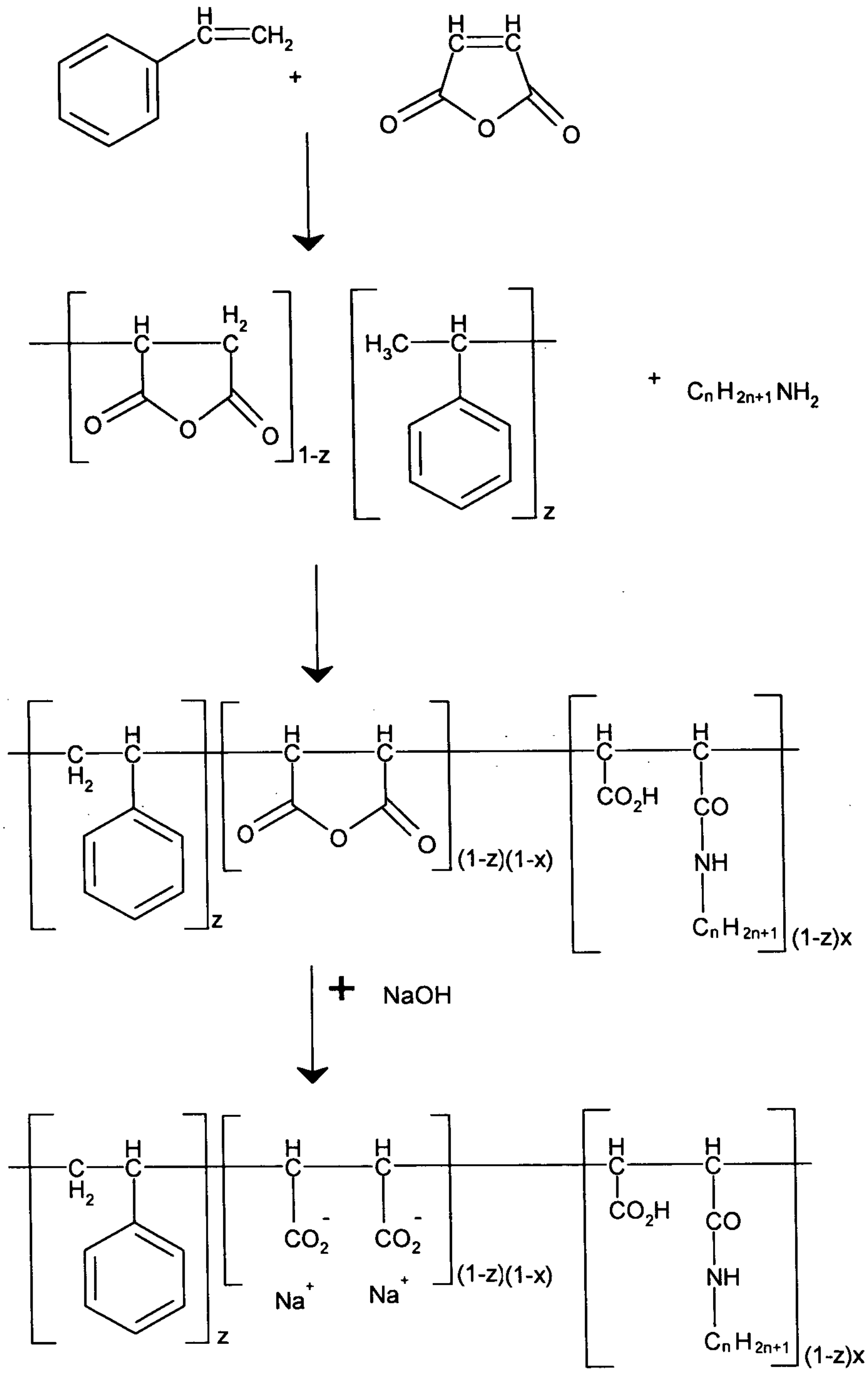


Figure 2

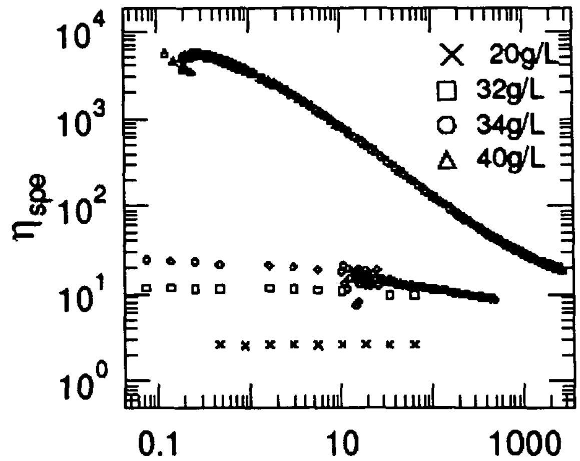


Figure 5

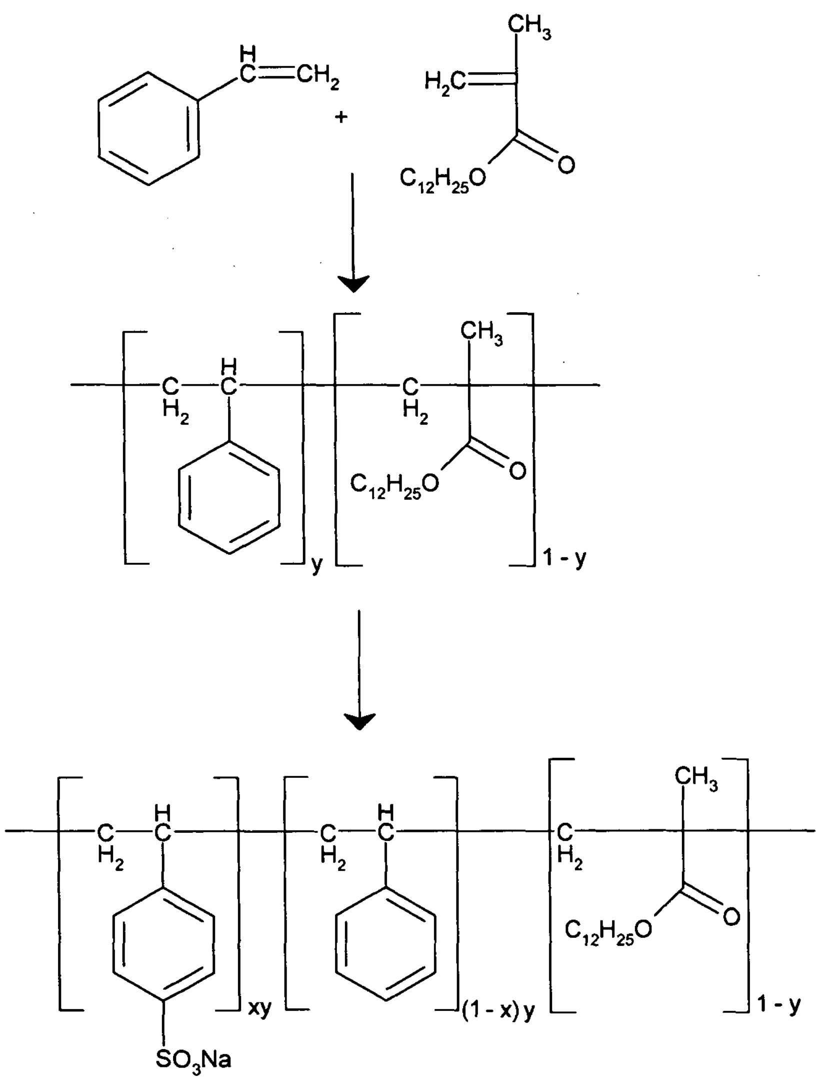

Figure 6

European Patent Office

# EUROPEAN SEARCH REPORT

Application Number
EP 04 29 1544

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 100 30 563 A (AGROLINZ MELAMIN GMBH LINZ) 10 January 2002 (2002-01-10)<br>* example 2 *<br>----- | 1-18 | C08F8/32<br>C08F8/36<br>C08F8/12 |
| X | US 3 684 777 A (FIELD NATHAN D ET AL) 15 August 1972 (1972-08-15)<br>* examples 2,7 *<br>----- | 1-18 | |
| X | US 3 168 403 A (WOLFGANG HIMMELMANN ET AL) 2 February 1965 (1965-02-02)<br>* claims; examples *<br>----- | 1-18 | |
| X | US 2004/054093 A1 (KUROMIYA MIYUKI ET AL) 18 March 2004 (2004-03-18)<br>* the whole document *<br>----- | 1-18 | |
| X | US 6 545 070 B1 (KUROMIYA MIYUKI ET AL) 8 April 2003 (2003-04-08)<br>* the whole document *<br>----- | 1-18 | TECHNICAL FIELDS SEARCHED (Int.Cl.7) |
| A | PATENT ABSTRACTS OF JAPAN vol. 1996, no. 04, 30 April 1996 (1996-04-30) & JP 7 333886 A (FUJI XEROX CO LTD), 22 December 1995 (1995-12-22)<br>* abstract *<br>----- | 1-18 | C08F |
| A | US 5 096 603 A (BOCK JAN ET AL) 17 March 1992 (1992-03-17)<br>* claims; examples *<br>----- | 1-18 | |
| A | US 4 317 893 A (SHEPPARD EDWARD W ET AL) 2 March 1982 (1982-03-02)<br>* claims; examples *<br>----- | 1-18 | |
| A | US 2001/034393 A1 (TOYOSAWA SHINICHI ET AL) 25 October 2001 (2001-10-25)<br>* example 1 *<br>----- | 1-18 | |

The present search report has been drawn up for all claims

1

| Place of search | Date of completion of the search | Examiner |
|---|---|---|
| Munich | 26 November 2004 | Baekelmans, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 29 1544

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2004

| Patent document cited in search report | | Publication date | Patent family member(s) | | | Publication date |
|---|---|---|---|---|---|---|
| DE 10030563 | A | 10-01-2002 | DE | 10030563 | A1 | 10-01-2002 |
| | | | AU | 7746601 | A | 08-01-2002 |
| | | | WO | 0200429 | A1 | 03-01-2002 |
| | | | DE | 10192820 | D2 | 22-05-2003 |
| | | | EP | 1294561 | A1 | 26-03-2003 |
| US 3684777 | A | 15-08-1972 | DE | 2113213 | A1 | 07-10-1971 |
| US 3168403 | A | 02-02-1965 | DE | 1143706 | B | 14-02-1963 |
| | | | BE | 612492 | A | |
| | | | CH | 414343 | A | 31-05-1966 |
| | | | FR | 1312241 | A | 14-12-1962 |
| | | | GB | 957417 | A | 06-05-1964 |
| US 2004054093 | A1 | 18-03-2004 | JP | 3371320 | B2 | 27-01-2003 |
| | | | JP | 10017616 | A | 20-01-1998 |
| | | | JP | 3371322 | B2 | 27-01-2003 |
| | | | JP | 10101731 | A | 21-04-1998 |
| | | | JP | 3289615 | B2 | 10-06-2002 |
| | | | JP | 10101733 | A | 21-04-1998 |
| | | | JP | 3470516 | B2 | 25-11-2003 |
| | | | JP | 10101873 | A | 21-04-1998 |
| | | | JP | 3371323 | B2 | 27-01-2003 |
| | | | JP | 10101725 | A | 21-04-1998 |
| | | | JP | 3446513 | B2 | 16-09-2003 |
| | | | JP | 10195234 | A | 28-07-1998 |
| | | | JP | 3271238 | B2 | 02-04-2002 |
| | | | JP | 10195134 | A | 28-07-1998 |
| | | | CN | 1341668 | A | 27-03-2002 |
| | | | EP | 1457503 | A2 | 15-09-2004 |
| | | | EP | 1457504 | A2 | 15-09-2004 |
| | | | EP | 0818474 | A2 | 14-01-1998 |
| | | | US | 2002016419 | A1 | 07-02-2002 |
| | | | US | 6274681 | B1 | 14-08-2001 |
| | | | US | 6545070 | B1 | 08-04-2003 |
| | | | US | 6210581 | B1 | 03-04-2001 |
| | | | US | 6022928 | A | 08-02-2000 |
| | | | CA | 2238679 | A1 | 23-01-1999 |
| US 6545070 | B1 | 08-04-2003 | JP | 3371320 | B2 | 27-01-2003 |
| | | | JP | 10017616 | A | 20-01-1998 |
| | | | JP | 3371322 | B2 | 27-01-2003 |
| | | | JP | 10101731 | A | 21-04-1998 |
| | | | JP | 3289615 | B2 | 10-06-2002 |
| | | | JP | 10101733 | A | 21-04-1998 |
| | | | JP | 3371323 | B2 | 27-01-2003 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 04 29 1544

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2004

| Patent document cited in search report | Publication date | Patent family member(s) | Publication date |
|---|---|---|---|
| US 6545070 B1 | | JP 10101725 A | 21-04-1998 |
| | | JP 3470516 B2 | 25-11-2003 |
| | | JP 10101873 A | 21-04-1998 |
| | | JP 3446513 B2 | 16-09-2003 |
| | | JP 10195234 A | 28-07-1998 |
| | | JP 3271238 B2 | 02-04-2002 |
| | | JP 10195134 A | 28-07-1998 |
| | | CN 1341668 A | 27-03-2002 |
| | | EP 1457503 A2 | 15-09-2004 |
| | | EP 1457504 A2 | 15-09-2004 |
| | | EP 0818474 A2 | 14-01-1998 |
| | | US 2002016419 A1 | 07-02-2002 |
| | | US 6274681 B1 | 14-08-2001 |
| | | US 6210581 B1 | 03-04-2001 |
| | | US 2004054093 A1 | 18-03-2004 |
| | | US 6022928 A | 08-02-2000 |
| | | CA 2238679 A1 | 23-01-1999 |
| JP 7333886 A | 22-12-1995 | NONE | |
| US 5096603 A | 17-03-1992 | AU 8778591 A | 20-05-1993 |
| | | CA 2055011 A1 | 07-05-1993 |
| | | GB 2262285 A | 16-06-1993 |
| US 4317893 A | 02-03-1982 | US 4284517 A | 18-08-1981 |
| US 2001034393 A1 | 25-10-2001 | US 6248825 B1 | 19-06-2001 |
| | | CA 2270369 A1 | 06-11-1999 |
| | | EP 0955316 A1 | 10-11-1999 |
| | | JP 2000026599 A | 25-01-2000 |

EPO FORM P0459

For more details about this annex : see Official Journal of the European Patent Office, No. 12/82